(19) Europäisches Patentamt
European Patent Office
Office européen des brevets

(11) **EP 3 492 344 B1**

(12) **EUROPEAN PATENT SPECIFICATION**

(45) Date of publication and mention
of the grant of the patent:
**20.04.2022 Bulletin 2022/16**

(21) Application number: **18209049.8**

(22) Date of filing: **29.11.2018**

(51) International Patent Classification (IPC):
**B62D 5/00** *(2006.01)*    **B62D 5/04** *(2006.01)*

(52) Cooperative Patent Classification (CPC):
**B62D 5/008; B62D 5/0472**

(54) **A VEHICLE WITH A VARIABLE STEERING RATIO**

FAHRZEUG MIT VARIABLER LENKÜBERSTZUNG

VÉHICULE AYANT UN RAPPORT DE DIRECTION VARIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2017 IT 201700138256**

(43) Date of publication of application:
**05.06.2019 Bulletin 2019/23**

(73) Proprietor: **CNH Industrial Italia S.p.A.
10135 Torino (IT)**

(72) Inventor: **BENEVELLI, Alessandro
42020 Albinea (IT)**

(74) Representative: **CNH Industrial IP Department
Leon Claeysstraat 3A
8210 Zedelgem (BE)**

(56) References cited:
EP-A2- 1 508 494        EP-A2- 1 637 435
WO-A1-2005/063550       WO-A1-2005/100132

**Description**

**BACKGROUND OF THE INVENTION**

The present invention relates to vehicles, and, more specifically to work vehicles which include a combination of electronic power steering (EPS) and a hydraulic steering unit (HSU).

It is common for work vehicles, such as backhoes, excavators, and tractors, to have power assisted steering systems in order to more easily steer the work vehicle. Generally, a power assisted steering system will include one of a HSU, EPS, or a steer-by-wire system.

A typical HSU may include a servovalve, a pump for pressuring a hydraulic fluid, and a motor or a linear hydraulic cylinder to effectuate movement on the wheels of the work vehicle. Generally, an HSU will be mechanically linked to the steering column of the vehicle. As the steering column rotates, the servovalve opens which in turn provides the hydraulic motor or linear hydraulic cylinder with sufficient hydraulic fluid to turn the wheels of the vehicle. If the HSU becomes inoperative, the work vehicle may still be maneuvered because the steering mechanism then behaves as a conventional linkage member.

An EPS typically includes a controller and an electric motor that acts on the steering column. EPS steering systems generally allow the operator to exert a nominal force to steer the vehicle because the motor compensates for the friction forces which act on the steering column. Thereby, the EPS controls the amount of torque the operator feels as he turns the steering wheel.

Some power assisted steering systems may include an HSU and EPS in order to further adjust the torque on the steering wheel so that the operator may more easily rotate the steering wheel. WO 2013/034514 discloses a steering system that combines a HSU with EPS. The addition of the EPS allows the operator to selectively alter torque on the steering wheel. WO 2005/100132 discloses the preamble of the independent claim and shows a steering system with a superimposing actuator and an adjusting device.

A steer-by-wire or drive-by-wire system may control the torque on the steering wheel as well as the steering ratio between the steering wheel and the HSU via an entirely electrical connection. In other words, the steer-by-wire system has no mechanical link between the steering wheel and the HSU. Therefore, a steer-by-wire system may be costly and may require heightened security protocols.

What is needed in the art is a cost-effective steering system that has a variable steering ratio and can control the torque on the steering wheel felt by an operator.

**SUMMARY OF THE INVENTION**

The present invention provides a steering mechanism with an HSU and a steering assister for selectively controlling the torque at the steering wheel which is felt by the operator and the steering ratio between the steering wheel and the HSU. The steering assister includes EPS and an epicyclic gearbox which is positioned in between the EPS and the HSU. A motor is coupled to the epicyclic gearbox for adjusting the steering ratio.

The invention in one form is directed to a steering mechanism according to claim 1 and its dependent claims..

**BRIEF DESCRIPTION OF THE DRAWINGS**

The above-mentioned and other features and advantages of this invention, and the manner of attaining them, will become more apparent and the invention will be better understood by reference to the following description of an embodiment of the invention taken in conjunction with the accompanying drawings, wherein:

Fig. 1 is a perspective view of a prior art steering mechanism having a combination of EPS and a HSU;
Fig. 2 is a schematic representation of the steering system according to the present invention;
Fig. 3 is a schematic representation of the kinematic chain of the steering system as shown in Fig. 2; and
Figs. 4A-4C illustrate graphical representations of the behavior of the steering mechanism under various conditions.

Corresponding reference characters indicate corresponding parts throughout the several views. The exemplification set out herein illustrates an embodiment, in one form, of the invention, and such exemplification is not to be construed as limiting the scope of the invention in any manner.

**DETAILED DESCRIPTION OF THE INVENTION**

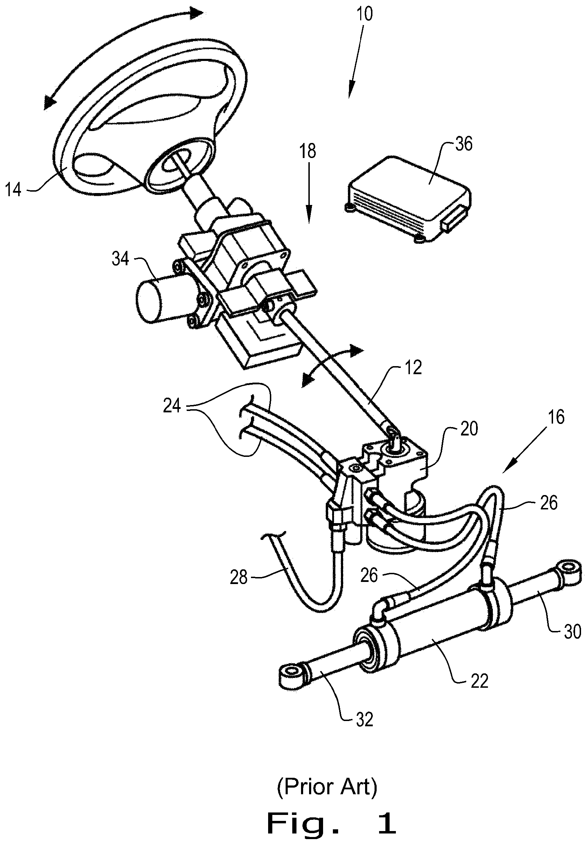

Referring now to the drawings, and more specifically to Fig. 1, there is shown a prior art steering system 10 of a vehicle that generally includes a steering column 12, a steering wheel 14, a first steering servomechanism 16, and a second steering servomechanism 18. The steering system 10 allows an operator to turn the steering wheel 14 and thereby control the steering angle of the wheels of the vehicle (not shown). The first and second steering servomechanisms 16, 18 may operate independently or in tandem in order to adjust various steering characteristics of the steering system 10.

The first steering servomechanism 16 is coupled to the end of the steering column 12. The first steering servomechanism 16 may include a hydraulic steering unit (HSU) 20 that is operably coupled to a double acting hydraulic cylinder 22 which effectuates movement on the wheels of the work vehicle. The HSU 20 may be in the form of a hydraulic valve 20, such as a double acting bidirectional proportional valve, that is coupled to the end of the steering column 12. The hydraulic valve 20 may be fluidly connected to a hydraulic pump (not shown) via lines 24 and to the cylinder 22 via lines 26. The hydraulic valve 20 may also include a return line 28 that is configured to return hydraulic fluid to the pump after fluid is expelled from the cylinder 22.

The cylinder 22 may be coupled to linkage arms 30, 32 which are in turn are connected to the stub axle of each wheel. The cylinder 22 may extend or the retract linkage arms 30, 32 in order to translate the rotation of the steering column 12 to move the wheels.

The second steering servomechanism 18 may be in the form of an electric assisted power steering (EPS) sub-system 18. The EPS 18 may include an electric motor 34 and an electronic control unit (ECU) 36 to control the electric motor 34. The electric motor 34 may be coupled to steering column 12 by known gears. The electric motor 34 may be mounted to the steering column 12 such that its axis of rotation extends transversely from the steering column 12. The ECU 36 may be operably coupled to the electric motor 34 by a wired or wireless connection.

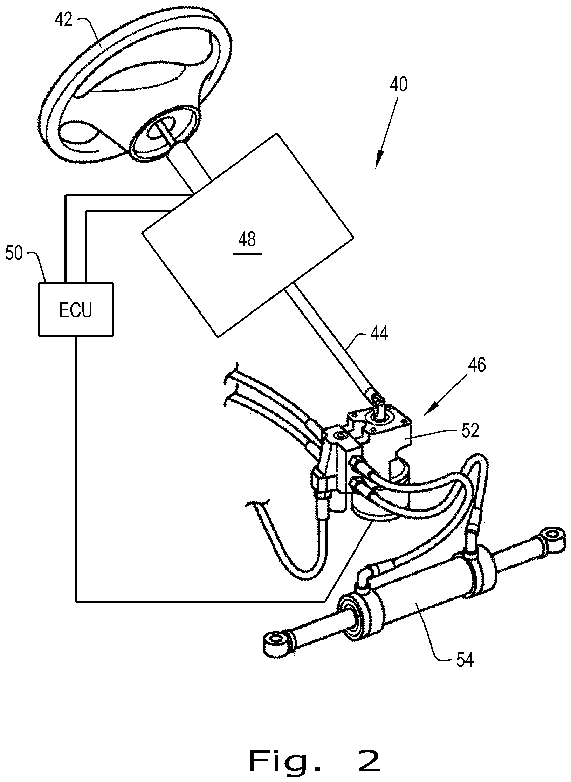

Referring now to Figs. 2-3, there is shown an embodiment of a steering mechanism 40 according to the present invention. The steering mechanism 40 generally includes a steering wheel 42, a rotatable steering column 44 that is coupled to the steering wheel 42, a hydraulic steering unit (HSU) 46, a steering assister 48, and an electronic control unit (ECU) 50. The steering mechanism 40 may be incorporated in a self-propelled vehicle. For example, the steering mechanism 40 may be incorporated in a work vehicle such as a tractor, a backhoe, a construction vehicle, a military vehicle, etc. The steering mechanism 40 is configured for controlling both of the torque experienced by the driver and the steering ratio.

The HSU 46 is operably connected to the steering column 44, and the HSU 46 is configured to translate the rotational movement of the steering column 44 to steer the vehicle. The HSU 46 generally includes a hydraulic valve 52 that is operably coupled to a hydraulic cylinder 54 via various hydraulic lines. The hydraulic valve 52 and cylinder 54 translate the rotational movement of the steering column 44 in order to adjust or maintain the angle of the wheel(s) of the vehicle. The HSU 46 may be in the form of any desired HSU which translates movement from the steering column to the wheel(s).

The steering assister 48 is operably coupled to the steering wheel 42. The steering assister 48 adjusts or maintains the torque that acts on the steering column 44 and/or the steering ratio between the steering wheel 42 and the HSU 46. The steering assister 48 generally includes an electric power steering system (EPS) 56, a gearbox 58, and a motor 60 coupled to the gearbox 58 (Fig. 2). The steering assister 48 may also include sensors, such as speed sensors and/or torque sensors to determine the speed and/or torque of the various components of the steering mechanism 40. For example, speed and/or torque sensors may be located on the steering column 44, the HSU 46, the EPS 56, and/or the motor 60.

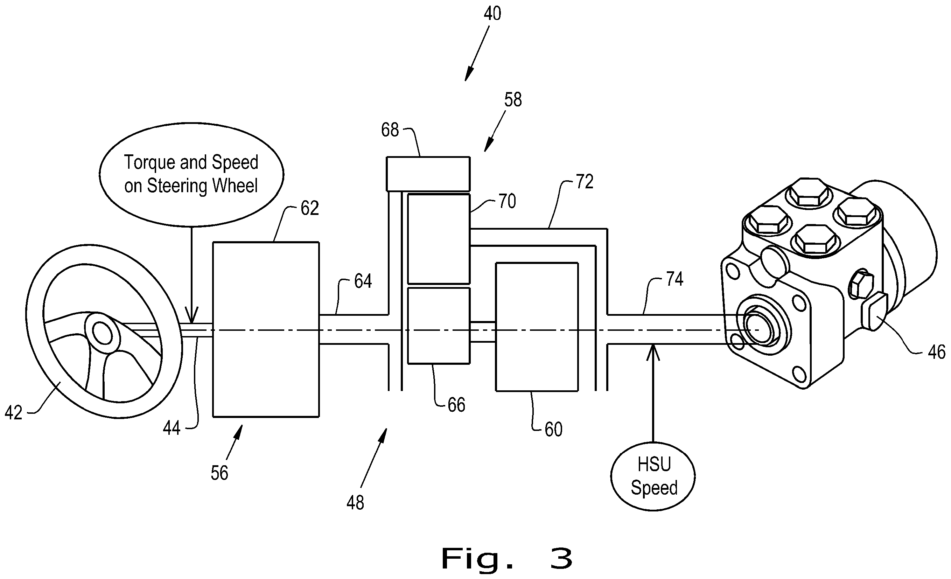

The EPS 56 is connected to the steering column 44 and to the gearbox 58. The EPS 56 may include a motor 62 and an output shaft 64. The motor 62 of the EPS 56 is coupled to the steering column 44 and generates a torque that acts on steering column 44. The motor 62 of the EPS 56 may be installed in parallel to the steering column 44 (Fig. 3).

The gearbox 58 is operably connected to the EPS 56 and the HSU 46. The gearbox 58 may be in the form of an epicyclic gearbox 58. The epicyclic gearbox 58 may include a sun gear 66, a ring gear 68, one or more planetary gears 70, and a planetary carrier 72, and an output 74, e.g. the carrier shaft 74. The ring gear 68 is coupled to the output shaft 64 of the EPS 56, the carrier shaft 74 is coupled to the HSU 46, and the sun gear 66 is coupled to the motor 60. The steering function, given the epicyclic gearbox 58 equations, is:

$$z_{sun} * \omega_{eMotor} + z_{ring} * \omega_{SW} - (z_{sun} + z_{car}) * \omega_{HSU} = 0$$

where $z_{sun}$ is the number of teeth of the sun gear 66, $z_{ring}$ is the number of teeth of the ring gear 68, $z_{car}$ is the number of teeth of the carrier shaft 74, $\omega_{eMotor}$ is the angular velocity of the motor 60 coupled to the sun gear 66, $\omega_{SW}$ is the angular velocity of the steering wheel 42, and $\omega_{HSU}$ is the angular velocity of the HSU 46.

As the motor 60 is coupled to the sun gear 66, the motor 60 controls the steering ratio between the steering wheel 42 and the HSU 46. Hence, the steering ratio may be controlled independently of the torque experienced by the operator. The motor 60 may be in the form of any desired motor, for example an electric motor 60. It is possible to limit the maximum torque and/or speed of the motor 60. For example, by limiting the maximum torque of the motor 60, a certain steering controllability may be guaranteed to the operator in the case of failure at a low speed. Also, it is possible to switch off the motor 60, thereby keeping the motor in a locked condition. It should be appreciated that even if the motor 60 is in an inoperative condition, for example if the motor 60 is locked, the steering function is still guaranteed with a reduced steering ratio, which is equal to:

$$z_{ring} * \omega_{SW} = (z_{sun} + z_{car}) * \omega_{HSU}$$

The ECU 50 is operably coupled with the HSU 46 and the steering assister 48. More particularly, the ECU 50 is operably coupled to the HSU 46, the motor 62 of the EPS 56, the motor 60 which is coupled to the gearbox 58, and to the various torque and/or speed sensors of the steering mechanism (Fig. 2). The ECU 50 is operably coupled to the HSU 46 and the steering assister 48 via a wired or wireless connection. For example, ECU 50 may be operably coupled to the aforementioned components by way of a CAN-BUS connection. The ECU 50 may be any desired controller, and further the ECU 50 may be incorporated as part of the vehicle's control system.

In operation, the ECU 50 may jointly or independently control the torque experienced by the operator and the steering ratio between the steering wheel 42 and the HSU 46. In this regard, the ECU 50 may simultaneously manage both of the torque and steering ratio. Further, the ECU 50 selectively adjusts the steering characteristics of the HSU 46 and the steering assister 48 independently. For example, at higher vehicle speeds or when traveling on a roadway, the ECU 50 may fix the steering ratio and independently adjust the torque on the steering wheel 42 which is experienced by the operator. The ECU 50 may maintain the motor 60 at a constant velocity, alter the motor speed depending on one or more variables, or the ECU 50 may turn off the motor 60 in order to fix the steering ratio at a desired ratio. For example, the ECU 50 may manage the speed of the motor 60 in order to achieve an HSU 46 target speed or ratio based on a steering wheel input and/or a working ratio map selected, e.g. low, medium, or high steering ratio selected from a user input. Also, the steering ratio may additionally be changed based on the speed of the vehicle and/or the steering wheel actuation speed. Additionally, for example, when operating the vehicle off-road or at low speeds, the ECU 50 may control the motor 60 to alter the steering ratio so that the operator may rotate the steering wheel 42 less to perform a desired steering maneuver which would otherwise require greater exertion by the operator to rotate the steering wheel 42 more. It should be appreciated that the ECU 50 may control the HSU 46 in an auto-guidance function where ECU 50 maintains the steering wheel 42 at a fixed position.

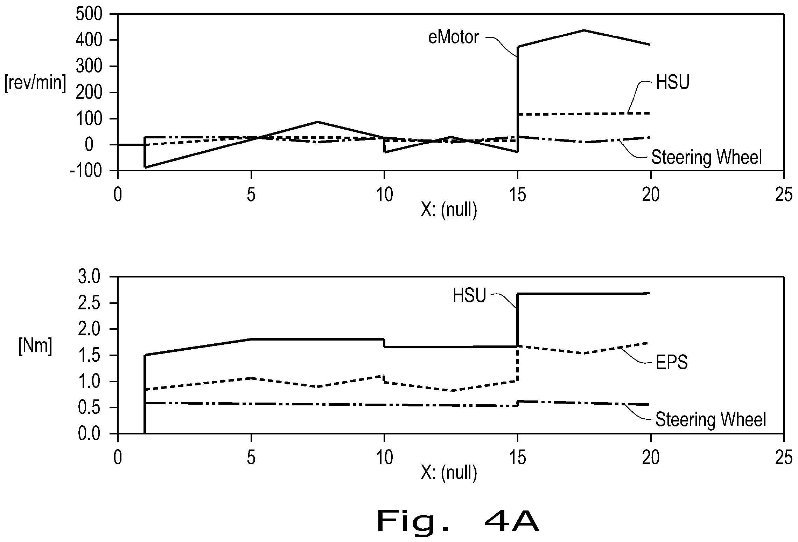

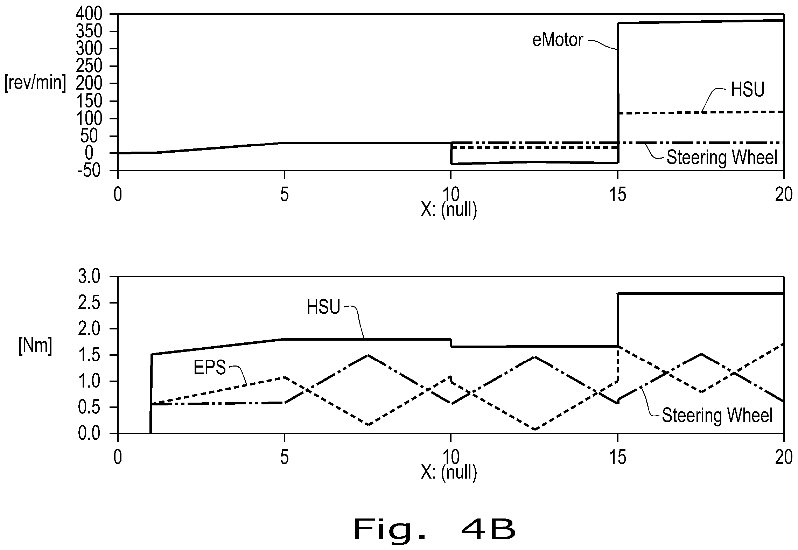

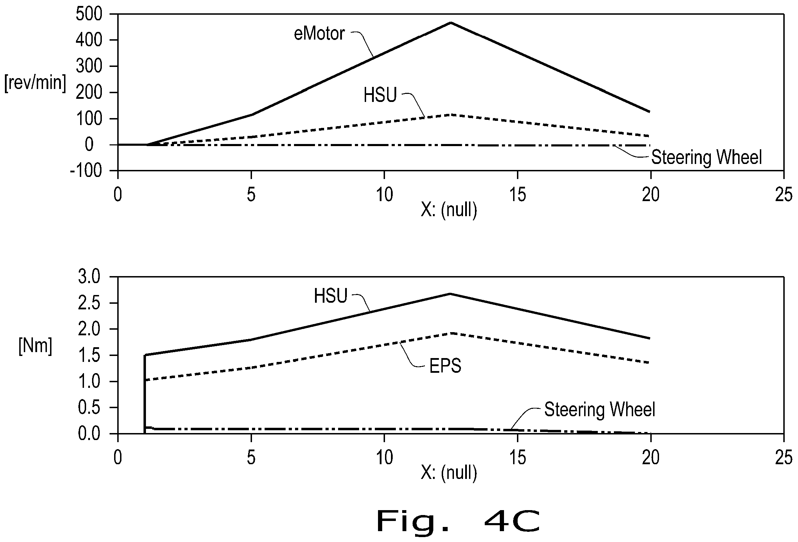

Referring now to Figs. 4A-4C, there is shown examples of the behavior of the steering mechanism 40 under various conditions. Fig. 4A illustrates the behavior of the steering wheel 42, the HSU 46, and the motor 60 under conditions where the torque on the steering wheel 42 is kept constant as the angular velocity of the HSU 46 and the motor 60 are controlled. The speed of the steering wheel 42 is also controlled. Fig. 4B illustrates the behavior of the steering mechanism 40 as the steering wheel speed is kept constant while the torque of the steering wheel 42 is controlled at differing speeds of the HSU 46. Fig. 4C illustrates the behavior of the steering mechanism 40 when the steering wheel speed is kept constant at zero while the speed of the HSU 46 is controlled by the motor 60, as in an auto-guidance function.

While this invention has been described with respect to at least one embodiment, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

**Claims**

1.  A steering mechanism (40) for a vehicle, comprising:

    a steering wheel (42);
    a rotatable steering column (44) coupled to the steering wheel (42);
    a hydraulic steering unit (46) operably connected to said steering column (44) and configured to translate a rotational movement of the steering column (44) to steer the vehicle;
    a steering assister (48) operably coupled to said steering wheel (42) and configured for controlling a torque that acts on said steering column (44) and a steering ratio between said steering wheel (42) and said hydraulic steering unit (46); **characterized by**:
    a controller (50) operably coupled with the hydraulic steering unit (46) and the steering assister (48), said controller (50) operably coupled to the hydraulic steering unit (46) and the steering assister (48) via a wired or wireless connection and being further configured by selectively adjusting the steering characteristics of the hydraulic steering unit (46) and the steering assister (48) independently.

**2.** The steering mechanism (40) of claim 1, wherein said steering assister (48) includes:

an electric power steering system (56) connected to said steering column (44) and having an output shaft (64), said electric power steering system (56) including a first motor (62) coupled to said steering column (44) and configured for generating a torque that acts on said steering column (44);
a gearbox (58) operably connected to said output shaft (64) of said electric power steering system (56) and said hydraulic steering unit (46); and
a second motor (60) coupled to said gearbox (58) and configured for controlling said steering ratio between said steering wheel (42) and said hydraulic steering unit (46).

**3.** The steering mechanism (40) of claim 2, wherein said gearbox (58) is an epicyclic gearbox (58) including a sun gear (66), a ring gear (68), and an output shaft (74).

**4.** The steering mechanism (40) of claim 3, wherein said output shaft (64) of said electric power steering system (56) is coupled to said ring gear (68) of the epicyclic gearbox (58).

**5.** The steering mechanism (40) as in one of claims 3 to 4, wherein said hydraulic steering unit (46) is coupled to said output shaft (74) of the epicyclic gearbox (58).

**6.** The steering mechanism (40) as in one of claims 3 to 5, wherein said second motor (60) is coupled to the sun gear (66) of said epicyclic gearbox (58).

**7.** The steering mechanism (40) as in any one of claims 2 to 6, wherein said controller (50) is operably coupled to said hydraulic steering unit (46), said first motor (62) of said electric power steering system (56), and said second motor (60) which is connected to said gearbox (58).

**8.** The steering mechanism (40) as in any one of claims 2 to 7, wherein said controller (50) turns off said second motor (60) in driving said vehicle on a roadway such that said steering ratio remains constant.

**9.** The steering mechanism (40) as in any one of claims 2 to 8, wherein said controller (50) controls said second motor (60) in driving said vehicle at a low speed such that said steering ratio is adjusted.

**10.** The steering mechanism (40) of any of the preceding claims, wherein said first motor (62) is installed in parallel to said steering column (44).

**11.** The steering mechanism (40) of any of the preceding claims, wherein said controller (50) simultaneously controls said torque experienced by the operator and said steering ratio.

**Patentansprüche**

**1.** Lenkmechanismus (40) für ein Fahrzeug, umfassend:

ein Lenkrad (42);
eine drehbare Lenksäule (44), die mit dem Lenkrad (42) verbunden ist;
eine hydraulische Lenkeinheit (46), die wirkend mit der Lenksäule (44) verbunden ist und dazu eingerichtet ist, eine Drehbewegung der Lenksäule (44) zum Lenken des Fahrzeugs zu übertragen;
eine Lenkunterstützungseinrichtung (48), die wirkend mit dem Lenkrad (42) verbunden ist und dazu eingerichtet ist, ein Drehmoment, das auf die Lenksäule (44) wirkt, und eine Lenkübersetzung zwischen dem Lenkrad (42) und der hydraulischen Lenkeinheit (46) zu steuern;
**gekennzeichnet durch**:
eine Steuereinrichtung (50), die wirkend mit der hydraulischen Lenkeinheit (46) und der Lenkunterstützungseinrichtung (48) verbunden ist, wobei die Steuereinrichtung (50) mit der hydraulischen Lenkeinheit (46) und der Lenkunterstützungseinrichtung (48) mittels einer kabelgebundenen oder kabellosen Verbindung wirkend verbunden ist und weiterhin dazu eingerichtet ist, selektiv und unabhängig voneinander die Lenkcharakteristiken der hydraulischen Lenkeinheit (46) und der Lenkunterstützungseinrichtung (48) anzupassen.

**2.** Lenkmechanismus (40) nach Anspruch 1, wobei die Lenkunterstützungseinrichtung (48) umfasst:

ein elektrisches Servolenksystem (56), das mit der Lenksäule (44) verbunden ist und eine Ausgangswelle (64) aufweist, wobei das elektrische Servolenksystem (56) einen ersten Motor (62) umfasst, der mit der Lenksäule (44) verbunden ist und dazu eingerichtet ist, ein Drehmoment zu erzeugen, das auf die Lenksäule (44) wirkt; ein Getriebe (58), das wirkend mit der Ausgangswelle (64) des elektrischen Servolenksystems (56) und der hydraulischen Lenkeinheit (46) verbunden ist; und einen zweiten Motor (60), der mit dem Getriebe (58) verbunden ist und dazu eingerichtet ist, die Lenkübersetzung zwischen dem Lenkrad (42) und der hydraulischen Lenkeinheit (46) zu steuern.

3. Lenkmechanismus (40) nach Anspruch 2, wobei das Getriebe (58) ein Planetengetriebe (58) ist, das ein Sonnenrad (66), ein Hohlrad (68) und eine Ausgangswelle (74) umfasst.

4. Lenkmechanismus (40) nach Anspruch 3, wobei die Ausgangswelle (64) des elektrischen Servolenksystems (56) mit dem Hohlrad (68) des Planetengetriebes (58) verbunden ist.

5. Lenkmechanismus (40) nach einem der Ansprüche 3 bis 4, wobei die hydraulische Lenkeinheit (46) mit der Ausgangswelle (74) des Planetengetriebes (58) verbunden ist.

6. Lenkmechanismus (40) nach einem der Ansprüche 3 bis 5, wobei der zweite Motor (60) mit dem Sonnenrad (66) des Planetengetriebes (58) verbunden ist.

7. Lenkmechanismus (40) nach einem der Ansprüche 2 bis 6, wobei die Steuereinrichtung (50) wirkend mit der hydraulischen Lenkeinheit (46), dem ersten Motor (62) des elektrischen Servolenksystems (56) und dem zweiten Motor (60) verbunden ist, der mit dem Getriebe (58) verbunden ist.

8. Lenkmechanismus (40) nach einem der Ansprüche 2 bis 7, wobei die Steuereinrichtung (50) den zweiten Motor (60) beim Fahren des Fahrzeugs auf einer Fahrbahn ausschaltet, sodass die Lenkübersetzung konstant bleibt.

9. Lenkmechanismus (40) nach einem der Ansprüche 2 bis 8, wobei die Steuereinrichtung (50) den zweiten Motor (60) beim Fahren des Fahrzeugs mit einer geringen Geschwindigkeit derart steuert, dass die Lenkübersetzung angepasst wird.

10. Lenkmechanismus (40) nach einem der vorhergehenden Ansprüche, wobei der erste Motor (62) parallel zu der Lenksäule (44) installiert ist.

11. Lenkmechanismus (40) nach einem der vorhergehenden Ansprüche, wobei die Steuereinrichtung (50) gleichzeitig das Drehmoment, das von dem Bediener erfahren wird und die Lenkübersetzung steuert.

**Revendications**

1. Mécanisme de direction (40) pour véhicule, comprenant :

    un volant (42) ;
    une colonne de direction rotative (44) couplée au volant (42) ;
    une unité de direction hydraulique (46) reliée de manière fonctionnelle à ladite colonne de direction (44) et configurée pour transformer un mouvement rotatif de la colonne de direction (44) afin de diriger le véhicule ;
    un dispositif de direction assistée (48) relié de manière fonctionnelle audit volant (42) et configuré pour commander un couple qui agit sur ladite colonne de direction (44) et un rapport de direction entre ledit volant (42) et ladite unité de direction hydraulique (46) ;
    **caractérisé par** :
    un dispositif de commande (50) couplé de manière fonctionnelle à l'unité de direction hydraulique (46) et au dispositif de direction assistée (48), ledit dispositif de commande (50) couplé de manière fonctionnelle à l'unité de direction hydraulique (46) et au dispositif de direction assistée (48) via une connexion filaire ou sans fil et étant en outre configuré pour ajuster sélectivement les caractéristiques de direction de l'unité de direction hydraulique (46) et du dispositif de direction assistée (48) de manière indépendante.

2. Mécanisme de direction (40) selon la revendication 1, dans lequel ledit dispositif de direction assistée (48) comprend :

un système de direction assistée électrique (56) relié à ladite colonne de direction (44) et ayant un arbre de sortie (64), ledit système de direction assistée électrique (56) comprenant un premier moteur (62) couplé à ladite colonne de direction (44) et configuré pour générer un couple qui agit sur ladite colonne de direction (44) ;
une boîte de vitesses (58) reliée de manière fonctionnelle audit arbre de sortie (64) dudit système de direction assistée électrique (56) et de ladite unité de direction hydraulique (46) ; et
un deuxième moteur (60) relié à ladite boîte de vitesses (58) et configuré pour commander ledit rapport de direction entre ledit volant (42) et ladite unité de direction hydraulique (46).

3. Mécanisme de direction (40) selon la revendication 2, dans lequel ladite boîte de vitesses (58) est un engrenage planétaire (58) comprenant un engrenage solaire (66), un engrenage annulaire (68), et un arbre de sortie (74).

4. Mécanisme de direction (40) selon la revendication 3, dans lequel ledit arbre de sortie (64) dudit système de direction assistée électrique (56) est couplé audit engrenage annulaire (68) de l'engrenage planétaire (58).

5. Mécanisme de direction (40) selon l'une quelconque des revendications 3 à 4, dans lequel ladite unité de direction hydraulique (46) est couplée audit arbre de sortie (74) de l'engrenage planétaire (58).

6. Mécanisme de direction (40) selon l'une quelconque des revendications 3 à 5, dans lequel ledit deuxième moteur (60) est couplé à l'engrenage solaire (66) dudit engrenage planétaire (58).

7. Mécanisme de direction (40) selon l'une quelconque des revendications 2 à 6, dans lequel ledit dispositif de commande (50) est couplé de manière fonctionnelle à ladite unité de direction hydraulique (46), audit premier moteur (62) dudit système de direction assistée électrique (56), et audit deuxième moteur (60) qui est relié à ladite boîte de vitesses (58).

8. Mécanisme de direction (40) selon l'une quelconque des revendications 2 à 7, dans lequel ledit dispositif de commande (50) arrête ledit deuxième moteur (60) qui conduit ledit véhicule sur une route de sorte que le rapport de direction reste constant.

9. Mécanisme de direction (40) selon l'une quelconque des revendications 2 à 8, dans lequel ledit dispositif de commande (50) commande ledit deuxième moteur (60) qui conduit ledit véhicule à une vitesse faible de sorte que ledit rapport de direction soit ajusté.

10. Mécanisme de direction (40) selon l'une quelconque des revendications précédentes, dans lequel ledit premier moteur (62) est installé parallèlement à ladite colonne de direction (44).

11. Mécanisme de direction (40) selon l'une quelconque des revendications précédentes, dans lequel ledit dispositif de commande (50) commande simultanément ledit couple exercé par l'opérateur et ledit rapport de direction.

(Prior Art)

# Fig. 1

Fig. 2

Fig. 3

Fig. 4A

Fig. 4B

Fig. 4C

**REFERENCES CITED IN THE DESCRIPTION**

**Patent documents cited in the description**

- WO 2013034514 A
- WO 2005100132 A